# EUROPÄISCHE PATENTSCHRIFT

(11) **EP 1 557 898 B1**
(45) Veröffentlichungstag und Bekanntmachung des Hinweises auf die Patenterteilung: **23.02.2011**
(21) Anmeldenummer: 04028834.2
(22) Anmeldetag: 06.12.2004
(51) Int. Cl.: H01M 8/06, H01M 8/24

(54) **Brennstoffzellenstapel mit einer Filtervorrichtung**
Fuel cell stack with integrated filter device
Pile à combustible avec un dispositif de filtration

(30) Priorität: 21.01.2004 DE 102004003273
(43) Veröffentlichungstag der Anmeldung: 27.07.2005
(73) Patentinhaber: Behr GmbH & Co. KG, 70469 Stuttgart (DE)
(72) Erfinder: Kaiser, Wolfram, 79848 Bonndorf (DE); Watzlawski, Markus, 73760 Ostfildern (DE)

(56) Entgegenhaltungen:
- WO-A-02/22234
- WO-A-2004/006374
- US-A- 3 991 724
- US-A- 5 902 365
- US-A1- 2002 150 805
- US-A1- 2003 096 148
- US-A1- 2004 023 096

## Beschreibung

Die Erfindung betrifft einen Brennstoffzellenstapel mit einer Filtervorrichtung gemäß dem Oberbegriff des Anspruches 1.

Die Umwandlung von chemischer in elektrische Energie mittels Polymerelektrolyt-Brennstoffzellen stellt eine besonders effiziente und umweltfreundliche Methode zur Gewinnung von elektrischem Strom aus den Betriebsmedien Wasserstoff und Sauerstoff dar. Dabei finden zwei räumlich getrennte Elektrodenreaktionen statt, bei denen Elektronen freigesetzt bzw. gebunden werden: H₂ ⇒ 2H⁺ + 2e⁻ (Anodische Reaktion)
2H⁺ + 2e⁻ + ½ O₂ ⇒ H₂O (Kathodische Reaktion)

Durch elektrische Verbindung der räumlich getrennten Reaktionszonen kann ein Teil der dabei umgesetzten Reaktionsenthalpie direkt als elektrischer Strom gewonnen werden.

Eine Polymerelektrolyt-Brennstoffzelle besteht im wesentlichen aus einer als Elektrolyt fungierenden Polymermembran, welche die Reaktanden Wasserstoff und Sauerstoff voneinander trennt und eine (H⁺-)Protonenleitfähigkeit aufweist, sowie aus zwei mit Katalysatormaterial belegten Elektroden, die unter anderem zum Abgriff des von der Brennstoffzelle erzeugten elektrischen Stroms erforderlich sind.

Elektroden und Polymermembran werden gewöhnlich zu einer Membran-Elektroden-Anordnung (MEA) kompaktiert. Zur technischen Realisierung zweier durch den Elektrolyt voneinander getrennten, elektrisch über einen Außenleiter verbundenen Gasräume werden Bipolarplatten verwendet, die aus elektrisch leitfähigem Material bestehen und mit Gasverteilerstrukturen versehen sind, die den An- und Abtransport der Reaktionsedukte und Reaktionsprodukte ermöglichen. Die Verteilerstrukturen in den einzelnen Brennstoffzellen weisen meist eine mäanderförmige Geometrie auf, um die MEA optimal mit den Betriebsmedien zu versorgen und eine günstige Abfuhr zu ermöglichen.

Somit besteht eine technische Brennstoff-Einzelzelle aus einer MEA, sowie zwei Bipolarplatten, die über Versorgungsanschlüsse mit den Betriebsmedien beaufschlagt und über die das Reaktionswasser abgeführt werden und die den beim Prozess auftretenden elektrischen Strom transportieren können.

Da die maximal erzielbare Zellenspannung einer Einzel-Brennstoffzelle physikalisch begrenzt ist und im Anwendungsfall regelmäßig unter 1 V, typischerweise im Bereich von 0,5 bis 0,7 V liegt, werden zur Herstellung höherer Spannungen und Leistungen mehrere Einzel-Brennstoffzellen in Form einer elektrischen Serienschaltung zusammengeschaltet. Dieser im Folgenden als Stapelaufbau bezeichnete Komplex, welcher auch als Brennstoffzellenstack bezeichnet wird, besteht aus einer oder mehreren aufeinandergestapelten und in einer elektrischen Serienschaltung angeordneten, planaren Einzel-Brennstoffzellen.

Zur Versorgung der einzelnen Brennstoffzellen im Brennstoffzellenstapel mit den jeweiligen Betriebsmedien werden große Hauptleitungen, sogenannte Ports, verwendet, welche axial durch den Stapelaufbau hindurchgeführt werden und welche die einzelnen Brennstoffzellen durch seitlich über Stichleitungen abzweigende Kanalstrukturen mit den Betriebsmedien versorgen.

Auf Grund der großen Menge an Reaktionsluft, die der Brennstoffzelle zur Versorgung der Brennstoffzellenreaktion mit Sauerstoff zugeführt werden müssen, und in Hinblick auf die relative Empfindlichkeit der katalytisch aktiven Bereiche und der damit verbundenen Gasdiffusionszonen gegenüber einer Kontamination durch Giftstoffe und Blockade durch Partikel ist die Filterung der zugeführten Umgebungsluft unbedingt erforderlich.Dafür geeignete Filter sind z.B. in der US 2003/0096148 und der WO 02122234 beschrieben.

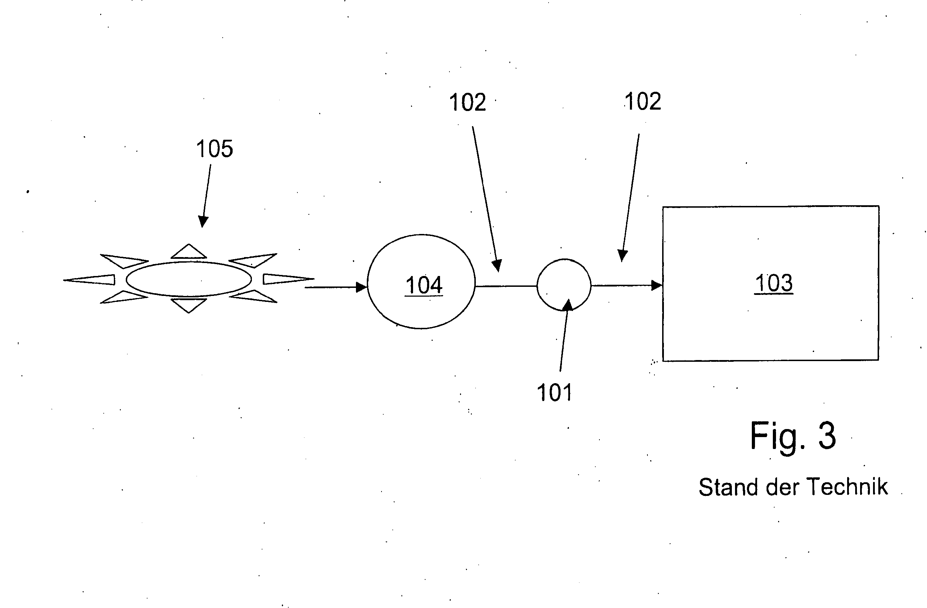

Gemäß dem in Fig. 3 schematisch dargestellten Stand der Technik findet der Filtervorgang durch einen Filterkörper 101 statt, der in der Zuführungsleitung 102 zwischen Brenstoffzellenstäpel 103 und Luftkompressor 104 oder Lüfter (bei Niederdruckzellen) angeordnet ist, wobei die Luft von aus der Umgebung, in Fig. 3 mit dem Bezugszeichen 105 bezeichnet, angesaugt wird. Im Anschluss an die Zuführungsleitung 102 ist im Inneren des Brennstoffzellenstapels 103 eine Hauptleitung (nicht dargestellt) mit den oben genannten Stichleitungen und Kanalstrukturen vorgesehen.

Für den Einsatz bei Anwendungen, die eine sehr kompakte Bauweise erfordern, wie beispielsweise im Kraftfahrzeugsektor, ergibt sich die Aufgabe, den Brennstoffzellenstapel mit Filtervorrichtung möglichst klein auszuführen. Dabei sollen jedoch die Druckverluste mit Blick auf höhere erforderliche Kompressorleistungen, sinkende Wirkungsgrade und längere Wartungsintervalle möglichst klein gehalten werden.

Es ist Aufgabe der Erfindung, einen verbesserten Brennstoffzellenstapel mit Filtervorrichtung zur Verfügung zu stellen, der insbesondere keinen oder nur minimal zusätzlichen Bauraum erfordert, eine gleichwertige Filterleistung bei einem minimalen Druckverlust aufweist und möglichst kostengünstig herzustellen ist.

Diese Aufgabe wird gelöst durch einen Brennstoffzellenstapel mit einer Filtervorrichtung mit den Merkmalen des Anspruches 1. Vorteilhafte Ausgestaltungen sind Gegenstand der Unteransprüche.

Erfindungsgemäß, ist ein Brennstoffzellenstapel mit einer Filtervorrichtung zum Filtern eines Betriebsmediums, das dem Brennstoffzellenstapel zugeführt wird, mit einem Filter vorgesehen, bei welchem der Filter in den Brennstoffzellenstapel integriert ist. Der Filter ist in eine axiale Hauptleitung des Brennstoffzellenstapels eingeführt, wobei zwischen der Außenfläche des Filters und der Wandung der Hauptleitung ein Spalt vorgesehen ist, so dass über eine möglichst große Fläche eine Filterung erfolgen kann. Durch die Integration des Filters in den Brennstoffzellenstapel entfällt der zusätzliche Bauraumbedarf für einen externen Filter, wie gemäß dem Stand der Technik vorgesehen, sowie die Kosten für ein externes Filtergehäuse. Ferner lässt sich die Zahl der Anschlüsse um zwei verringern, da ein Anschluss der Zuleitung an das Filtergehäuse zur Zuleitung und Ableitung des zu filternden Betriebsmediums entfällt, wodurch der Druckabfall verringert werden kann.

Die Positionierung des filters erfolgt bevorzugt mittels im Spalt angeordneter Stütz- und Positionierungselemente, welche eine mittige Anordnung gewährleisten.

Auf Grund der großen Filterfläche ergibt sich ein sehr geringer Druckverlust, der in Verbindung mit dem Aufwachsen des Filterkuchens verlängerte Wartungsintervalle ermöglicht.

Der Filter weist bevorzugt ein hohlzylindrisches Profil auf, jedoch sind prinzipiell auch andere Ausgestaltungen möglich.

Zur Erhöhung der Lebensdauer eines Filters ist bevorzugt eine Reinigungseinrichtung vorgesehen, welche insbesondere durch eine elektrische Beheizbarkeit des Filters gebildet ist.

Der Filter kann in einem austauschbaren Modul angeordnet sein, so dass er einfach und ohne Beschädigungen beim Einbau ausgetauscht werden kann. Das Modul kann patronenartig ausgebildet sein.

Bevorzugt ist der Filter zumindest bereichsweise hygroskopisch ausgebildet und/oder weist Kapillaren auf, die auftretendes Kondenswasser aufnehmen und/oder eine Befeuchtung des Betriebsmediums ermöglichen.

Vor dem Brennstoffzellenstapel kann ein Vorfilter angeordnet sein, welcher insbesondere größere Partikel ausfiltert, so dass der Filter im Inneren des Brennstoffzellenstapels möglichst lange seine Funktion erfüllen kann.

Der Filter kann zur Vergrößerung der Filterfläche auch über den Brennstoffzellenstapel hinausragen und in teilweise in einem mit der Zuleitung verbundenen Gehäuse, insbesondere einem Schlauch, aufgenommen sein.

Gegenstand der Erfindung ist auch ein Verfahren zum Betreiben eines Brennstoffzellenstapels mit mindestens zwei Brennstoffzellen sowie einer über eine Hauptleitung und mindestens zwei Abzweigungen erfolgende Betriebsmittel zufuhr, dadurch gekennzeichnet, dass mindestens ein Betriebsmedium mittels eines Filters im Inneren des Brennstoffzellenstapels gereinigt wird.

Im Folgenden wird die Erfindung anhand von Ausführungsbeispielen, teilweise unter Bezugnahme auf die Zeichnung, im Einzelnen erläutert. In der Zeichnung zeigen:
- Fig. 1: eine schematische Darstellung eines Filters, wie er in einem Brennstoffzellenstapel gemäß dem ersten Ausführungsbeispiel verwendet wird,
- Fig. 2a: eine schematische Darstellung des teilweise aufgeschnittenen Brennstoffzellenstapels ohne Darstellung des Filters,
- Fig. 2b: eine Fig. 2a entsprechende Darstellung mit halb herausgezogenem Filter, und
- Fig. 3: eine schematische Darstellung einer herkömmlichen Filtervorrichtung gemäß dem Stand der Technik.

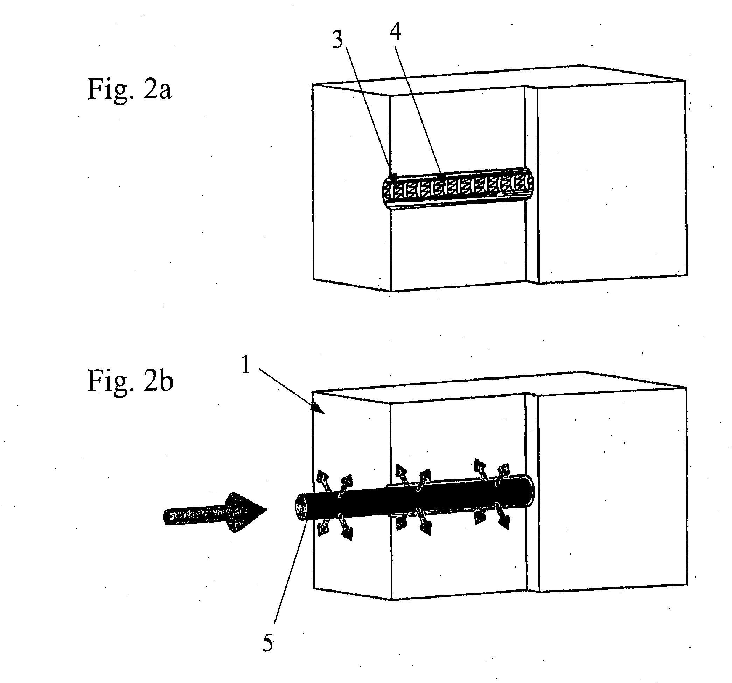

Ein Brennstoffzellenstapel 1, wie er in Fig. 2a und 2b angedeutet ist, besteht aus einer Mehrzahl von Einzel-Brennstoffzellen, welche ihrerseits aus zwei Bipolarplatten und einer dazwischen angeordneten MEA aufgebaut sind (nicht dargestellt). Die Einzel-Brennstoffzellen werden über je eine oder je mehrere, gemeinsame Hauptleitungen 3 und hiervon in Form von Stichleitungen abgehenden Abzweigungen 4 mit Betriebsmedien, insbesondere mit Kühlmittel, sowie Wasserstoff (H₂) und Luft (insbesondere O₂) versorgt, welche für die oben beschriebene Reaktion erforderlich sind. Im Folgenden wird nur auf die Luftversorgungs-Hauptleitung 3 eingegangen. Die Strömungsrichtung ist durch Pfeile angedeutet.

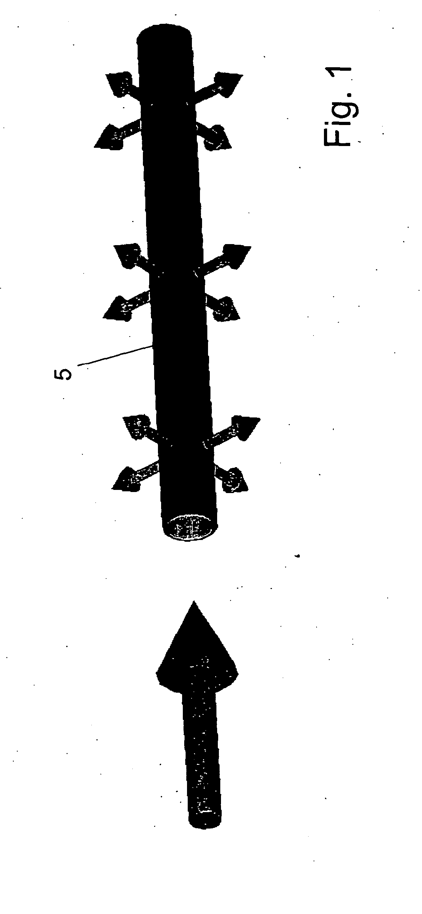

Ein Filter 5 zur Filterung der als Betriebsmedium dienenden Umgebungsluft ist hohlzylindrisch ausgebildet, wobei die zu filternde Luft den Filter 5 in Längsrichtung durchströmt und durch die Seitenwände über im Wesentlichen die gesamte Länge und den gesamten Umfang des Hohlzylinders austritt, wie in den Figuren 1 und 2b angedeutet. Der hohlzylindrische Filter 5 ist etwa konzentrisch in der ebenfalls im Wesentlichen zylinderförmig ausgebildeten Hauptleitung 3 angeordnet, wobei abgesehen von Stütz- und Positionierungselementen (nicht dargestellt) ein Ringspalt zwischen der Außenmantelfläche des Filters 5 und der Innenfläche der Hauptleitung 3 vorgesehen ist, so dass eine möglichst große Ausströmfläche gewährleistet ist. Der Filter 5 weist etwa oder annähernd die gleiche Länge wie die Hauptleitung 3 auf, wobei Abdichtungen am vorderen und hinteren Ende des Filters 5 vorgesehen sind, die einen Austritt von ungefilterter Luft zu den Stichleitungen verhindern.

Gemäß einem zweiten, nicht in der Zeichnung dargestellten Ausführungsbeispiel ist der Filter elektrisch beheizbar und besteht aus einem temperaturbeständigen Filtermaterial. Steigt der Druckabfall auf Grund eines wachsenden Filterkuchens über einen vorgegebenen Wert oder ist auf Grund einer Sättigung des Filters mit Schadstoffen eine Erneuerung erforderlich, so kann durch Umkehrung des Gasflusses in Verbindung mit der Beheizung des Filters ein "Abbrennen" der Schadstoffe und/oder ausgefilterten Partikel erfolgen und dadurch der Filter gereinigt werden. Die Anordnung des Filters im Brennstoffzellenstapel entspricht der des ersten Ausführungsbeispiels.

Gemäß einem weiteren Ausführungsbeispiel, das nicht in der Zeichnung dargestellt ist, ist vor einer Filtervorrichtung gemäß einem der zuvor beschriebenen Ausführungsbeispiele ein Vorfilter angeordnet, wobei die Anordnung und der Aufbau des Vorfilters einem solchen gemäß dem Stand der Technik entspricht. Ein Vorfilter ist insbesondere bei stark und/oder mit großen Partikeln verschmutzten Betriebsmedien sinnvoll, so dass bevorzugt eine Vorreinigung in einem groben Vorfilter erfolgt und der feine Filter im Inneren des Brennstoffzellenstapels nicht durch grobe Partikel zugesetzt wird. Natürlich kann auch der Vorfilter selbstreinigend ausgebildet sein.

Zur weiteren Vergrößerung der Filterfläche ist gemäß einem weiteren nicht in der Zeichnung dargestellten Ausführungsbeispiel der hohlzylindrische Filter derart verlängert ausgebildet, dass er über das Gehäuse der Brennstoffzelle hinausragt, wobei er außerhalb in einem an der Zuleitung angeschlossenen Schlauch konzentrisch angeordnet ist, so dass auch gemäß diesem Ausführungsbeispiel lediglich ein den Strömungsquerschnitt verkleinernder und damit den Druckabfall vergrößernder Übergang von Zuleitung zum Filter bzw. Brennstoffzellengehäuse vorgesehen ist. Hierbei ist der Filter wie auch der Schlauch bevorzugt elastisch ausgebildet, so dass bei vergrößerter Filterfläche außerhalb des Brennstoffzellen-Gehäuses eine optimale und flexible Anpassung an den vorhandenen Bauraum möglich ist.

## Patentansprüche

1. Brennstoffzellenstapel (1) bestehend aus einer Mehrzahl von Brennstoffzellen mit einer Filtervorrichtung zum Filtern eines Betriebsmediums, das dem Brennstoffzellenstapel (1) zugeführt wird, mit einem Filter (5), wobei der Filter (5) In den Brennstoffzellenstapel (1) integriert ist, so dass der Filter (5) In eine axiale Hauptleitung (3) des Brennstoffzellenstapels (1) eingeführt ist, **dadurch gekennzeichnet, dass** zwischen der Außenfläche des Filters (5) und der Wandung der Hauptleitung (3) ein Spalt vorgesehen ist.

2. Brennstoffzellenstapel nach Anspruch 1, **dadurch gekennzeichnet, dass** im Spalt Stütz- und Positionierungselemente angeordnet sind.

3. Brennstoffzellenstapel nach einem der vorhergehenden Ansprüche, **dadurch gekennzeichnet, dass** der Filter (5) hohlzylindrisch ausgebildet ist.

4. Brennstoffzellenstapel nach einem der vorhergehenden Ansprüche, **dadurch gekennzeichnet, dass** eine Reinigungseinrichtung für den Filter (5) vorgesehen ist.

5. Brennstoffzellenstapel nach einem der vorhergehenden Ansprüche, **dadurch gekennzeichnet, dass** der Filter (5) elektrisch beheizbar ist.

6. Brennstoffzellenstapel nach einem der vorhergehenden Ansprüche, **dadurch gekennzeichnet, dass** der Filter (5) in einem austauschbaren Modul angeordnet ist.

7. Brennstoffzellenstapel nach einem der vorhergehenden Ansprüche, **dadurch gekennzeichnet, dass** der Filter (5) zumindest bereichsweise hygroskopisch ausgebildet ist und/oder Kapillaren aufweist, die auftretendes Kondenswasser aufnehmen und/oder eine Befeuchtung des Betriebsmediums ermöglichen.

8. Brennstoffzellenstapel nach einem der vorhergehenden Ansprüche, **dadurch gekennzeichnet, dass** vor dem Brennstoffzellenstapel (1) ein Vorfilter angeordnet ist.

9. Brennstoffzellenstapel nach einem der vorhergehenden Ansprüche, **dadurch gekennzeichnet, dass** der Filter über den Brennstoffzellenstapel (1) hinausragt und in einem mit der Zuleitung verbundenen Gehäuse aufgenommen ist.

10. Verfahren zum Betreiben eines Brennstoffzellenstapels (1) gemäss Anspruch 1, mit mindestens zwei Brennstoffzellen sowie einer über eine Hauptleitung (3) und mindestens zwei Abzweigungen (4) erfolgende Betriebsmittelzufuhr, **dadurch gekennzeichnet, dass** mindestens ein Betriebsmedium mittels eines Filters (5) im Inneren des Brennstoffzellenstapels (1) gereinigt wird.

## Claims

1. A fuel cell stack (1) composed of a plurality of fuel cells, comprising a filter device for filtering an operating medium that is supplied to the fuel cell stack (1), and comprising a filter (5), the filter (5) being integrated in the fuel cell stack (1), and therefore the filter (5) is inserted into an axial main line (3) of the fuel cell stack (1), **characterized in that** a gap is provided between the outer surface of the filter (5) and the wall of the main line (3).

2. The fuel cell stack according to claim 1, **characterized in that** support- and positioning elements are disposed in the gap.

3. The fuel cell stack according to one of the preceding claims, **characterized in that** the filter (5) hollow-cylindrical.

4. The fuel cell stack according to one of the preceding claims, **characterized in that** a cleaning device for the filter (5) is provided.

5. The fuel cell stack according to one of the preceding claims, **characterized in that** the filter (5) can be electrically heated.

6. The fuel cell stack according to one of the preceding claims, **characterized in that** the filter (5) is disposed in a replaceable module.

7. The fuel cell stack according to one of the preceding claims, **characterized in that** the filter (5) is hygroscopic, at least in regions, and/or includes capillaries that draw up condensation water that forms, and/or make it possible to moisten the operating medium.

8. The fuel cell stack according to one of the preceding claims, **characterized in that** a prefilter is disposed upstream of the fuel cell stack (1).

9. The fuel cell stack according to one of the preceding claims, **characterized in that** the filter extends beyond the fuel cell stack (1) and is accommodated in a housing that is connected to the supply line.

10. A method for operating a fuel cell stack (1) according to claim 1, comprising at least two fuel cells and a supply of operating means via a main line (3) and at least two branches (4), **characterized in that** at least one operating medium is cleaned using a filter (5) in the interior of the fuel cell stack (1).

## Revendications

1. Bloc de piles à combustible (1) se composant d'une pluralité de piles à combustible comprenant un dispositif de filtration servant à filtrer un milieu de fonctionnement qui est fourni au bloc de piles à combustible (1), comprenant un filtre (5) où le filtre (5) est intégré dans le bloc de piles à combustible (1), de sorte que le filtre (5) est introduit dans une conduite principale axiale (3) du bloc de piles à combustible (1),
**caractérisé en ce qu'**il est prévu un intervalle entre la surface extérieure du filtre (5) et la paroi de la conduite principale (3).

2. Bloc de piles à combustible selon la revendication 1, **caractérisé en ce que** des éléments d'appui et de positionnement sont disposés dans l'intervalle.

3. Bloc de piles à combustible selon l'une ou l'autre des revendications précédentes, **caractérisé en ce que** le filtre (5) est configuré de façon cylindrique creuse.

4. Bloc de piles à combustible selon l'une quelconque des revendications précédentes, **caractérisé en ce qu'**il est prévu un dispositif d'épuration pour le filtre (5).

5. Bloc de piles à combustible selon l'une quelconque des revendications précédentes, **caractérisé en ce que** le filtre (5) peut être chauffé électriquement.

6. Bloc de piles à combustible selon l'une quelconque des revendications précédentes, **caractérisé en ce que** le filtre (5) est disposé dans un module interchangeable.

7. Bloc de piles à combustible selon l'une quelconque des revendications précédentes, **caractérisé en ce que** le filtre (5) est configuré, au moins partiellement, de façon hygroscopique et / ou comporte des capillaires qui absorbent de l'eau de condensation qui est présente et / ou permettent une humidification du milieu de fonctionnement.

8. Bloc de piles à combustible selon l'une quelconque des revendications précédentes, **caractérisé en ce qu'**un préfiltre est disposé en amont du bloc de piles à combustible (1).

9. Bloc de piles à combustible selon l'une quelconque des revendications précédentes, **caractérisé en ce que** le filtre (5) dépasse du bloc de piles à combustible (1) et est logé dans un boîtier raccordé à la conduite d'alimentation.

10. Procédé de fonctionnement d'un bloc de piles à combustible (1) selon la revendication 1, comprenant au moins deux piles à combustible ainsi qu'une alimentation du milieu de fonctionnement fourni par une conduite principale (3) et par au moins deux conduites secondaires (4), **caractérisé en ce qu'**au moins un milieu de fonctionnement est épuré à l'intérieur du bloc de piles à combustible (1), au moyen d'un filtre (5).
